# EUROPEAN PATENT APPLICATION

(11) **EP 1 672 599 A1**
(43) Date of publication of application: **21.06.2006**
(21) Application number: 05111325.6
(22) Date of filing: 25.11.2005
(51) Int. Cl.: G07F 17/16, G11B 20/00

(54) **Post-paid billing system and method for multimedia files**

(30) Priority: 16.12.2004 KR 2004107119
(71) Applicant: Park, Soo-Min, Seoul 138-775 (KR)
(72) Inventor: Park, Soo-Min, Songpa-gu Seoul 138-775 (KR)
(74) Representative: Beck, Michael Rudolf

(57) **Abstract**

The present invention relates to a system and method for determining whether playing has been performed, determining the number of times that the playing has been performed, and charging fees based on the determination results (hereinafter "post-payment") after music has been provided from an on-line sound source server and has been played in users' players, such as MP3 players, so as not only to charge the users fees for multimedia files in a post-payment manner, not in a convention advance payment manner but also to overcome the problems of a conventional method of charging fees at the time when users access an on-line source server and download or play music (hereinafter "advance payment"). In particular, the present invention relates to a post-paid billing system and method wherein multimedia files are first provided to the user and fees are charged based on the number of times (including first playing that is related to the determination of whether playing has been performed) the users have played the provided multimedia files. According to the present invention, the users can play and enjoy the multimedia files at a lower price. Since the fees are clearly and correctly charged, the profit distribution between service providers and multimedia copyright holders can be easily made, whereby the copyright holders can earn the royalties. Since the multimedia files can be freely duplicated/distributed, the copyright infringement due to unauthorized duplication can be basically prevented, whereby the development of multimedia industry can be promoted.

## Description

### BACKGROUND OF THE INVENTION

### 1. Field of Invention

The present invention relates to a technique for charging fees for multimedia files provided to a user, and more particularly, to a post-paid billing system and method capable of providing a multimedia file to a terminal having a function of playing the provided multimedia file, receiving from the terminal the number of times the multimedia file has been played, and charging users the fees corresponding to the number of times the multimedia file has been played.

### 2. Description of the Prior Art

With the recent development of digital-related technologies, users can enjoy movies, music and the like through a computer, a mobile communication terminal (e.g., a mobile phone and a PDA), a wireless LAN terminal (e.g., a notebook computer), a portable audio player (e.g., an MP3P), a portable video player or the like, which has a function of playing video/audio.

A representative example in which a user enjoys music through a related art mobile communication terminal will be discussed.

First, a user has access to a content providing server through a wired/wireless Internet function of a mobile communication terminal and checks a music list. Then, the user chooses a music file and makes a download request for the desired music file.

In response to the download request, the content providing server requests the user to pay fees for a music file, approves the download of music file when the user pays the fees, and forwards the music file (e.g., an MP3 file) to the user's mobile communication terminal. Accordingly, the user can enjoy music by playing the music file through an MP3 play function of the mobile communication terminal.

However, the aforementioned MP3 file is very easy to duplicate and distribute and difficult to charge normal royalties unlike typical audio CDs and the like. Therefore, according to the prior art as described above, whenever the user makes a download request for an MP3 file, fees for the MP3 file download are requested to be charged to the user. Then, only when the user pays the fees, the MP3 file can be provided to the user.

Furthermore, in the prior art as described above, the fees for the MP3 file download are determined in consideration of the amount of damage due to unauthorized MP3 file duplication, and accordingly, the user must pay too much fees for the MP3 files to enjoy music through his/her mobile communication terminal.

In particular, even though the user has paid fees for the MP3 file, he/she may merely enjoy the music file one or two times and then delete or listen the music file no longer if the music file is not harmony with his/her own taste in music. In this case, there is a problem in that the user wastes money because he/she does not enjoy the music enough to correspond to the paid fees.

Due to the problem in the prior art, users seem to be reluctant to download MP3 files through a normal route (i.e., MP3 file download through a high-price prepaid billing system) and prefer to download the MP3 files through a computer, a mobile communication terminal or the like in an unauthorized manner and enjoy the music without just payment.

There is a music service using a streaming scheme other than the above-described download scheme. This streaming scheme allows users to directly listen to music stored in a central server without downloading the music. The streaming-type service requires payment in advance, like the download type service. Meanwhile, in the streaming-type service, users can listen to music while accessing a central server because music files are not downloaded, and music files cannot be copied and moved using players, such as MP3 players and mobile communication terminals, so that the streaming-type service is limitative compared to the download-type service.

Meanwhile, a copyright holder who owns the right for multimedia such as music and movies (e.g., an album production association, a music source production association, an image production association, singers, producers and the like) cannot earn just royalties due to unauthorized distribution of the music files, movie files and the like.

In particular, since users are reluctant to download MP3 files in a high-price prepaid billing system as previously described, the multimedia copyright holders cannot sufficiently earn the royalties even though they provide lawful multimedia files over the wired/wireless Internet.

Accordingly, there is an urgent need for a technique of charging only fees corresponding to the number of times a multimedia file has been played when a user does not permanently possess the multimedia file, i.e., when the user plays the multimedia file one or two times and then deletes or play the multimedia file no longer, such that the user can enjoy a variety of music, movies and the like at a lower price through his/her mobile communication terminal and a copyright holder of the music and movies can correctly or clearly charge fees corresponding to the number of times the user enjoys the music or movies, thus earning royalties via the wired/wireless Internet.

### SUMMARY OF THE INVENTION

The present invention has been conceived to solve the aforementioned problems and to meet the aforementioned requirements. It is an object of the present invention to provide a post-paid billing system and method, which is based on the number of times a multimedia file has been played, capable of providing a multimedia file to a terminal having a function of playing the provided multimedia file, receiving from the terminal the number of times the multimedia file has been played, and charging users the fees corresponding to the number of times the multimedia file has been played

### BRIEF DESCRIPTION OF THE DRAWINGS

Fig. 1 is a diagram illustrating the configuration of a communication network according to an embodiment of the present invention;
Fig. 2a is a diagram illustrating the configuration of a mobile communication terminal in a post-paid billing system which is based on the number of times a multimedia file has been played according to an embodiment of the present invention;
Fig. 2b is a diagram illustrating the configuration of a content providing server in a post-paid billing system which is based on the number of times a multimedia file has been played according to an embodiment of the present invention;
Fig. 3a is a flowchart illustrating a post-paid billing method which is based on the number of times the multimedia file has been played in a content providing server according to an embodiment of the present invention; and
Fig. 3b is a flowchart illustrating a post-paid billing method which is based on the number of times the multimedia file has been played in a mobile communication terminal according to an embodiment of the present invention.

### DETAILED DESCRIPTION OF THE INVENTION

Hereinafter, preferred embodiments of the present invention will be described more in detail with reference to the accompanying drawings. If it is determined that specific descriptions on known functions or constructions of the present invention render the subject matter of the present invention unnecessarily obscure in explaining the present invention, however, detailed descriptions thereof will be omitted herein. In addition, terminologies to be described later are terminologies defined in consideration of the functions of the present invention and may vary according to the usual practice or intention of the user or operator. Accordingly, the definitions of the terminologies should be defined on the basis of the disclosures described throughout the specification.

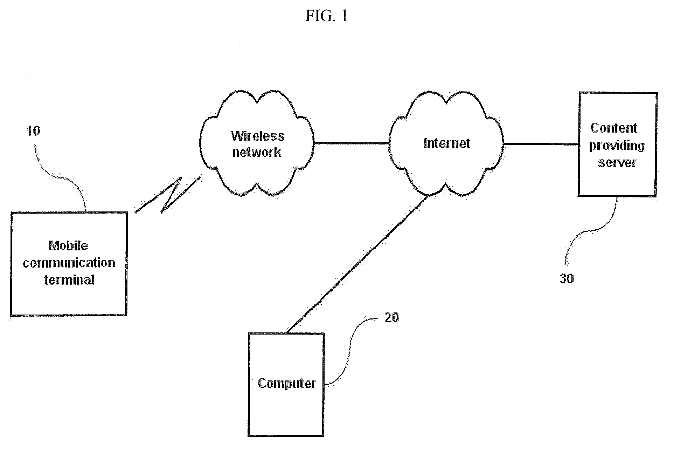

Fig. 1 is a diagram illustrating the configuration of a communication network according to an embodiment of the present invention.

As shown in Fig. 1, a communication network according to the present invention includes a mobile communication terminal 10, a computer 20, and a content providing server 30.

The mobile communication terminal 10 has a video/audio play function, and also has a known mobile communication function (e.g., voice communication and short message service (SMS)), a wireless Internet function (e.g., web (warp) page access), a data communication function with the computer 20, and the like.

Hereinafter, although it will be described in the present invention that the mobile communication terminal 10 is used as a device for playing multimedia files (e.g., MP3 files, AVI files, etc.), it will be easily understood by those skilled in the art that the present invention is applicable to terminals having a wired or wireless Internet function or a data communication function, such as computers, notebook computers, PDAs, portable MP3 players, and portable video players.

Preferably, the present invention includes a means for enabling the royalties among fees, which a content provider (i.e., service provider) charges a user, to be paid to an owner of the multimedia copyright. More preferably, music and movie sources and the like are processed and created in the form of multimedia files through a cooperative relationship between the content provider and the copyright holder.

In particular, the content providing server 30 inserts a code for identifying a relevant multimedia file (hereinafter, referred to as "identification code") into the multimedia file when creating the multimedia file, and stores the created multimedia file in a database (DB).

This identification code is copyright management information that can uniquely indicate the relevant multimedia. The owner of the multimedia copyright may provide the content provider with the identification codes allocated to each of the multimedia files, and the content provider may then insert the identification code into the multimedia file. Alternatively, the owner of the multimedia copyright may directly insert the identification code allocated to each multimedia file into the relevant multimedia file and then provide the content provider with the multimedia file with the identification code inserted therein.

When receiving a download request for a multimedia file from the mobile communication terminal 10 or computer 20, the content providing server 30 forwards the multimedia file with the identification code inserted therein. At this time, the content providing server 30 provides a user of the mobile communication terminal 10 or computer 20 with the relevant multimedia file without requesting the user to pay fees for the downloaded multimedia file.

Meanwhile, the mobile communication terminal 10 may either download the multimedia file by having access to the content providing server 30 through the wireless Internet function or download the multimedia file stored in the computer 20. In this case, the user may download the multimedia file with the identification code inserted therein while having access to the content providing server 30 via the computer 20, and then download the multimedia file to the mobile communication terminal 10 through a cable connection or local area communication.

In response to a multimedia play request (input of a multimedia play request signal) from the user, the mobile communication terminal 10 plays the downloaded multimedia file. At this time, the mobile communication terminal 10 counts the number of times each multimedia file has been played through, by using the identification code. Further, the mobile communication terminal 10 forwards the identification code and the number of times for the multimedia file, which the multimedia file has been played, to the content providing server 30 at a predetermined period.

The content providing server 30 charges the user the fees for the multimedia file use in a post-paid manner according to the identification code and the number of times the multimedia file has been played in the mobile communication terminal 10. Here, the multimedia file fees are charged according to how the user pays the multimedia file fees. For example, when the user wishes to pay the multimedia file fees along with mobile communication fees, the content providing server 30 charges the multimedia file fees in such a manner that the multimedia file fees can be added to the mobile communication fees. Alternatively, when the user wishes to pay the multimedia file fees using his/her credit card, the content providing server 30 charges the multimedia file fees in such a manner that the multimedia file fess can be charged using the credit card information.

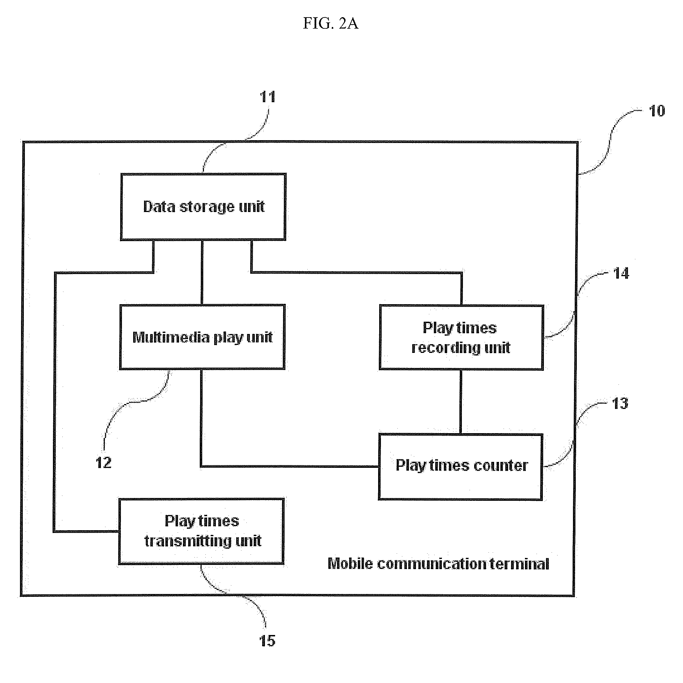

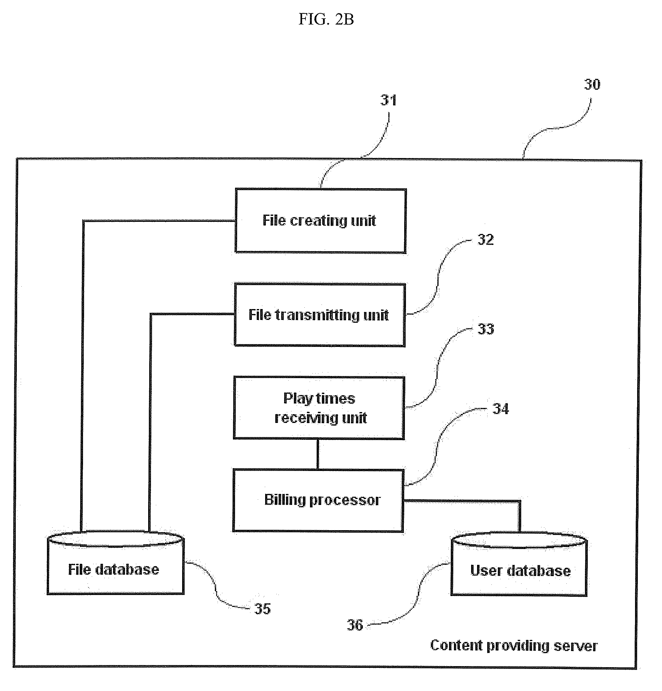

Figs. 2a and 2b are diagrams illustrating the configurations of a mobile communication terminal and a content providing server in a post-paid billing system which is based on the number of times the multimedia file has been played according to an embodiment of the present invention.

As shown in Figs. 2a and 2b, the mobile communication terminal 10 of the post-paid billing system that is based on the number of times the multimedia file has been played according to the present invention includes a data storage unit 11, a multimedia play unit 12, a counter 13 for counting the number of times played, a recording unit 14 for recording the number of times played, and a transmitting unit 15 for transmitting the number of times played. The content providing server 30 includes a file creating unit 31, a file transmitting unit 32, a receiving unit 33 for receiving the number of times played, a billing processor 34, a file database 35, and a user database 36. Here, the files are multimedia files including music files such as MP3, WMA, OGG files, and video files such as AVI and MPG files.

Meanwhile, although it is not shown in the figures, the mobile communication terminal 10 further includes basic elements such as a wireless transceiver for transmitting and receiving data in wireless mode, a memory in which a CODEC for playing video/audio is stored, a display unit for displaying music title/singer/play time or a movie screen, a key input unit for producing a play request signal through a button, a microphone for inputting voice, and a speaker for outputting sound/voice.

The content providing server 30 will be hereinafter described in detail.

The file creating unit 31 processes an external multimedia source (e.g., sound source, audio CD, or the like) provided by an owner of the multimedia copyright in order to create a multimedia file (e.g., an MP3 file, an AVI file, or the like).

In particular, the file creating unit 31 inserts an identification code into the multimedia source to produce a multimedia file. Herein, an identification code is inserted in a header portion of the multimedia file, and a unique identification code is preferably inserted in each multimedia file.

The identification code may be composed of a combination of number, symbol, character and the like. Preferably, the identification codes are set on the basis of information on album, movie and the like to uniquely indicate each of the multimedia files.

For example, an identification code, "58-2003-000092-B-KR" is inserted in a MP3 file entitled "aesimga" sung by a singer "Seung-Hun Shin". In the identification code, "58" means a singer number indicating the singer "Seung-Hun Shin", "2003" means an album release year, "000092" means that the song is a 92^{nd} song of the singer "Seung-Hun Shin" (i.e., "aesimga"), "B" means that a music genre is ballade, and "KR" means that the song is released in Korea.

When receiving a multimedia file download request signal from the mobile communication terminal 10, the file transmitting unit 32 forwards the relevant multimedia file stored in the file database 35 to the mobile communication terminal 10.

In this case, the mobile communication terminal 10 may receive the multimedia file from terminals owned by other persons in which the multimedia file with the identification code inserted therein is stored, through the multimedia file share (file copy) with the other terminals, without need to make a download request for the multimedia file to the content providing server 30.

That is, according to the present invention, the multimedia file is distributed via the content providing server 30, but the identification code is inserted in the multimedia file. Therefore, even though the multimedia file is duplicated/distributed (through P2P data share between users) in an unauthorized manner, the relevant mobile communication terminal should provide the content providing server 30 with the identification code and the number of times played. As a result, the user must duly pay the fees for the multimedia file use. Accordingly, since the present invention allows the users to freely duplicate/share multimedia files in an authorized manner, unauthorized multimedia file duplication can be basically solved.

In addition, it should be designed such that when a user who copies the multimedia file from the other terminal plays the multimedia file on his/her mobile communication terminal, the mobile communication terminal forwards the identification code and the number of times played to the content providing server 30 such that the content providing server can charge the multimedia file fees according to the number of times the user has played the multimedia file. Preferably, when the mobile communication terminal of the user who has played the duplicated multimedia file forwards the identification code and the number of time played, the content providing server 30 confirms the user through the authentication of the user's mobile communication terminal. Then, if the user is a new user, the content providing server induces the user to join the service or to input the payment information.

Alternatively, in a case where the user downloads the multimedia file from the computer 20 instead of downloading the multimedia file directly through the mobile communication terminal 10, the file transmitting unit 32 forwards the multimedia file stored in the file database 35 to the computer 20 upon receipt of a multimedia file download request signal from the computer 20. In such a case, the user downloads the multimedia file, which has been downloaded to the computer 20, to the mobile communication terminal 10 or portable audio player through cable connection or local area communication (e.g., bluetooth, infrared communication (IrDA), a wireless LAN (W-LAN), ZigBee, ultra-wideband (UWB) communication or the like) to play the downloaded multimedia file.

Preferably, the user has access to the content providing server 30 via the mobile communication terminal 10 or the computer 20 to join a post-paid service for playing the multimedia file according to the present invention and then to download the multimedia file. More preferably, the user beforehand inputs the payment information to pay the multimedia file fees in a post-paid manner according to the number of times the multimedia file has been played. Alternatively, the user may modify the fee payment information for the multimedia files or immediately pay the fees by inputting the specific payment information when the number of times the multimedia file has been played is forwarded to the content providing server 30.

Here, the user payment information includes mobile communication subscription information (e.g., mobile terminal number or mobile fee payment information), credit card information, automatic payment information, and the like.

The receiving unit 33 for receiving the number of times played (hereinafter, "play times receiving unit") receives the identification code and the play times for the multimedia file from the mobile communication terminal 10 etc. Preferably, for each mobile communication terminal, the play times receiving unit 33 collects and manages the identification code and the play times for the multimedia file, which have received from the mobile communication terminal 10 at a predetermined period.

The billing processor 34 charges the user of the mobile communication terminal the fee corresponding to the identification code and the play times received from the play times receiving unit 33. Here, the fees are calculated by "one-time play fee for each identification code X the number of times played." Respective one-time play fees for the multimedia files may be different from each other. Alternatively, the user's play fees may be calculated in a predetermined discount rate or may not be changed when total play times for all the identification codes exceeds a predetermined number (e.g., 100 times). Moreover, a variety of fee calculation systems, such as a system in which predetermined fees are charged for first playing and, thereafter, free playing is unconditionally allowed, may be employed.

For example, when the user payment information stored in the user database 36 is mobile communication fee payment information, the billing processor 34 charges the user, along with the mobile communication fees of the user, " |300 (300Won)" obtained by applying "|30 (30Won)" as a one-time play fee of an MP3 file of "aesimga" sung by the singer "Seung-Hun Shin" and "10 times" as the play times to calculate the fees corresponding to an identification code ("58-2003-000092-B-KR") and the play times ("10 times").

The user can check a multimedia file play fee through a notice for the mobile communication fees or a web page with use details included therein, and pay the fee for the multimedia file play along with the mobile communication fees or using a credit card or the like in a post-paid manner. The content provider receives the user's multimedia file play fee from the mobile communication company, a credit card company or the like, and shares the paid fees with the owner of the multimedia copyright in a predetermined ratio to pay the normal royalties to the copyright holder.

The file database 35 stores multimedia files with the identification code inserted therein, which are produced by the file creating unit 31.

The user database 36 stores the user payment information input by the user.

Hereinafter, the mobile communication terminal 10 will be described in detail.

The data storage unit 11 stores the multimedia file with the identification code inserted therein, which has been downloaded from the content providing server 30 or the computer 20, as well as the play times for the identification code which are recorded by the recording unit 14 for recording the number of times played (hereinafter, "file play times recording unit").

In response to a multimedia file play request signal from the user, the multimedia play unit 12 plays the multimedia file stored in the data storage unit 11.

Here, upon receipt of the multimedia file play request signal, the multimedia play unit 12 reads out the relevant multimedia file stored in the data storage unit 11. When the multimedia file does not include the inserted identification code, the multimedia play unit 12 notifies the user, by means of a message through the display device or voice/error sound through the speaker, the fact that the play is impossible. That is, to prevent the multimedia file from being downloaded and played in an unauthorized manner, the mobile communication terminal 10 prevents the user from playing the multimedia file when the multimedia file has not previously authenticated through the identification code (i.e., when the identification has not been inserted in the multimedia file).

The counter 13 for counting the number of times play (hereinafter, "play times counter") monitors a play state for the multimedia file in the multimedia play unit 12 and counts the number of times the multimedia file has been played. Here, the play times counter 13 increases the number of times played by "1" each time the user plays the multimedia file.

In particular, the play times counter 13 increases the number of times the multimedia file has been played, when the multimedia play unit 12 plays at least a certain amount of the multimedia file.

Preferably, when the user does not sufficiently play a multimedia file, e.g. when the user stops playing a five-minute song in ten seconds, the fee is not charged in view of equity for the fee charging. That is, only when the user sufficiently plays the multimedia file, the fee is charged in a post-paid manner. To this end, it is preferable to increase the number of times played only when the user plays the multimedia file over a certain amount of time.

When the play times counter 13 counts the number of times played, the play times recording unit 14 records in the data storage unit 11 the number of time played for the multimedia file with the identification code inserted therein.

For example, when the user plays the MP3 file of the song "aesimga" sung by "Seung-Hun Shin" at one time, the play times counter 13 counts, by an increment of "1", the number of times the MP3 file has been played. Accordingly, the play times recording unit 14 increases the play times by "1" to record this increase in a table in which the identification code and the play times for the MP3 file have been recorded. Here, the table is used to store and manage the identification codes and play times for all multimedia files, and preferably, an accumulated play times for the multimedia file associated with the identification code. It will be easily understood by those skilled in the art that the identification code and play times can be recorded in various formats.

Table 1 below is a table used to record the identification code and play times.

**Table 1**

| Identification Code | (Accumulated) Play Times |
|---|---|
| 58-2003-000092-B-KR | 14 |
| 34-2004-000012-D-KR | 6 |
| .. | .. |

The transmitting unit 15 for transmitting the number of times play (hereinafter, "play times transmitting unit") transmits the identification code and the play times for the multimedia file, which are stored in the data storage unit 11 in a table format, to the content providing server 30 at a predetermined period of time (e.g., one month, one week or the like).

In addition, a play limit value (e.g., about 5,000 songs per month) may be set in the mobile communication terminal 10 in order to prevent the user from playing another multimedia file even though the user did not pay the fees for the multimedia files in a post-paid manner after downloading and playing the multimedia file. In this case, the mobile communication terminal 10 may further include a play restriction unit for informing the impossibility of play and the instructions to transmit the play times when the total play times for the multimedia files associated with all the identification codes reach the predetermined play limit value.

Here, the fact that play is impossible is notified to the user by means of a message or voice/error sound indicating that the multimedia file can be played no longer. The instructions to transmit the play times are notified to the user so as to indicate that the user should forward the play times to the content providing server 30 through a user's operation or automatic play times transmission function to overcome the impossibility of play.

When the play times transmitting unit 15 transmits the respective identification codes and play times to the content providing server 30 through the user operation or the automatic play times transmission function, the play restriction unit initializes the play times for the multimedia files associated with all the identification codes stored in the data storage unit 11. Here, the transmission of the respective identification codes and play times to the content providing server 30 causes the corresponding fees to be charged to the user. Preferably, after the fees have been charged to the user, the play times associated with all the identification codes are initialized to release or remove the play restriction in the mobile communication terminal 10.

Accordingly, the user can further play the multimedia files until the total play times for the multimedia files associated with all the identification codes reach the predetermined play limit value.

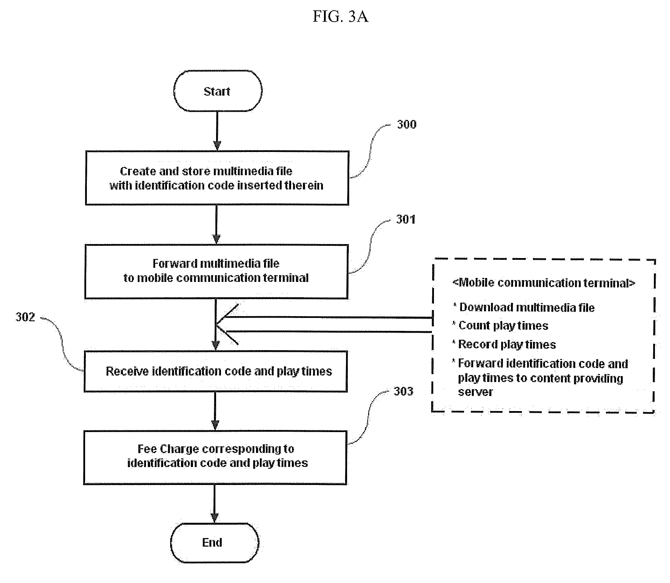

Fig. 3a is a flowchart illustrating a post-paid billing method which is based on the number of times the multimedia file has been played in a content providing server according to an embodiment of the present invention;

First, the content providing server creates and stores a multimedia file by inserting an identification code into a multimedia source provided by an owner of the multimedia copyright (300).

Upon receipt of a multimedia file download request signal from the mobile communication terminal 10, the content providing server forwards the relevant multimedia file to the mobile communication terminal 10 (301). Preferably, the content providing server 30 provides the user of the mobile communication terminal with the multimedia file without charging the fees.

Then, when receiving the identification code and play times for the multimedia file from the mobile communication terminal 10 (302), the content providing server 30 charges the user of the mobile communication terminal the fees corresponding to the identification code and play times based on the user payment information (303). Preferably, if the registered user payment information is in relation to a mobile communication fee, it is preferred that the content providing server 30 charges the fees corresponding to the identification code and play times together with the mobile communication fee.

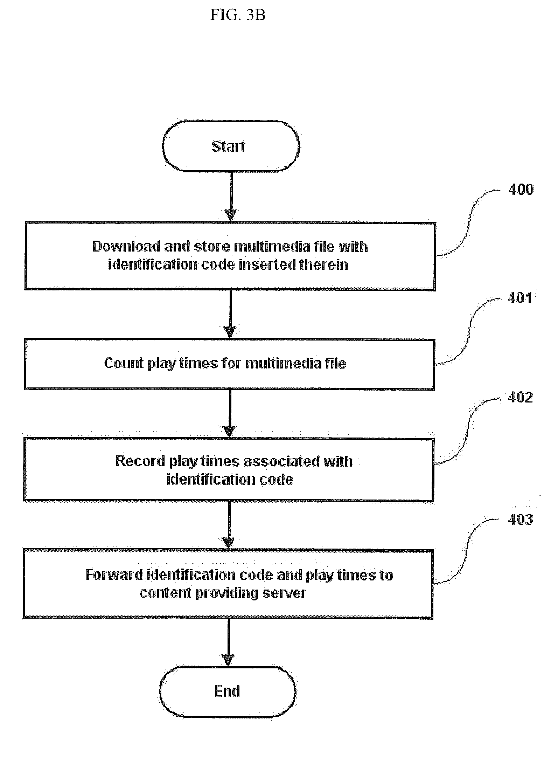

Fig. 3b is a flowchart illustrating a post-paid billing method which is based on the number of times the multimedia file has been played in a mobile communication terminal according to an embodiment of the present invention.

First, the mobile communication terminal downloads and stores the multimedia file with an identification code inserted therein from the content providing server 30 or computer 20 (400).

Then, when the multimedia file is played, the mobile communication terminal monitors the play state and counts the play times (401). Preferably, the mobile communication terminal monitors the play state of the multimedia file and increases the play times for the multimedia file only when the multimedia file has been played over a certain amount of time.

After counting up the number of times the multimedia file has been played, the mobile communication terminal records the play times for the multimedia file associated with the identification code (402).

The mobile communication terminal forwards the recorded identification code and play times for the multimedia files to the content providing server 30 at a predetermined period of time (403).

Meanwhile, between steps 402 and 403, the method further comprises the step of informing the impossibility of play and the instructions to transmit the play times when the total recorded play times for the multimedia files associated with all the identification codes reach the predetermined play limit value in step 402.

Preferably, after the impossibility of play and the instructions to transmit the play times are notified because the total play times for the multimedia files associated with all identification codes reach the predetermined play limit value, the mobile communication terminal initializes the play times associated with all the identification codes if the mobile communication terminal forwards the respective identification codes and play times to the content providing server 30 in response to the instructions to transmit the play times.

Here, the transmission of the respective identification codes and play times to the content providing server 30 causes the corresponding fees to be charged to the user. Preferably, after the fees have been charged to the user, the play times for the files associated with all the identification codes are initialized to release or remove the play restriction in the mobile communication terminal 10.

Furthermore, between steps 400 and 401, the method further comprises the step of checking the multimedia file in response to the multimedia file play request signal and informing the impossibility of play when the identification code is not inserted in the multimedia file.

Hereinafter, another embodiment of the present invention (i.e., a portable multimedia player having no wired/wireless Internet function) will be explained.

Although it has been described that the present invention is applicable to a computer, a notebook computer, a PDA, a mobile communication terminal, a portable MP3 player, a portable video player, which has a wired or wireless Internet function or data communication function, the present invention may be applied to a portable multimedia player (e.g., a portable MP3 player or a portable video player) having no wired/wireless Internet function.

In this case, since the portable multimedia player having no wired/wireless Internet function cannot directly send the content providing server 30 the number of times the multimedia file has been played, it is required that the identification code and play times be sent to the content providing server 30 through a program or the like installed in the computer 20.

To prevent the user from further playing multimedia files without sending the identification code and play times to the content providing server 30, i.e. without paying the fees for the multimedia files corresponding to the play times, a play limit value (e.g., about 5,000 songs per month) is set in the portable multimedia player. Preferably, when the total play times for the multimedia files associated with all the identification codes reach the predetermined play limit value, the impossibility of play and the instructions to transmit the play times to the content providing server 30 through the program installed in the computer 20 are notified to the user.

For example, when the user enjoys 5,000 songs through the portable multimedia player, a message is provided to the user such that the user logs in the content providing server 30 and sends the identification code and play times to the server. Accordingly, the user connects the portable multimedia player with the computer 20 and uploads the identification code and play times to the content providing server 30 through the program.

Then, the program installed in the computer 20 reads out the identification code and play times, which are stored in the portable multimedia player, and sends them to the content providing server 30.

Here, the user can have access to the content providing server 30 via the computer 20 to directly input the identification code and play times stored in the portable multimedia player. However, it is preferred that the program installed in the computer 20 automatically reads out all the identification codes and play times stored in the portable multimedia player and sends them to the content providing server 30 since the user may incorrectly input the number of times the multimedia files have been played.

Further, if the user connects the portable multimedia player with the computer 20 and then sends all the identification codes and play times to the content providing server 30 through the program to remove the play restriction in the portable multimedia player, the content providing server 30 requests the user to pay the fees for the multimedia files corresponding to the identification code and the play times of the relevant user.

Accordingly, if the user has paid the fees corresponding to the multimedia play times using an automatic payment system or credit card, the content providing server 30 sends an authentication key for releasing or removing the play restriction on the portable multimedia player to the computer 20. Preferably, the authentication key for releasing or removing the play restriction in the portable multimedia player is encrypted and can be used only once (so-called, one-time authentication key). Alternatively, it is possible to provide an authentication key composed of a combination of random numbers through an SMS function of the mobile communication terminal to allow the user to remove the play restriction by inputting the authentication key to the portable multimedia player.

The program installed in the computer 20 sends the downloaded authentication key for removing the play restriction to the portable multimedia player. Accordingly, since the play restriction in the portable multimedia player is removed using the authentication key, and preferably the total play times for the multimedia files associated with all the identification codes are initialized, the user can further enjoy the multimedia files corresponding to about 5,000 songs.

Hereinafter, a further embodiment of the present invention (a portable multimedia player having no wired/wireless Internet function) will be explained.

In this embodiment of the present invention, if the play restriction is imposed on a portable multimedia player (e.g., a portable MP3 player or portable video player having no wired/wireless Internet function), the portable multimedia player instruct the user to forward the identification code and play times to the content providing server 30 through a terminal having a wired/wireless Internet function such as a computer, a mobile communication terminal or the like.

In this case, if the user connects the portable multimedia player with the computer and forwards the identification code and play times to the content providing server 30 through the computer, the play restriction is removed in the portable multimedia player.

Preferably, a program for transmitting the identification code and play times, which has been distributed by the content providing server 30, is installed in the computer. When the computer receives the identification code and play times from the portable multimedia player, such a program determines that the user correctly reports the multimedia play times and thus sends the portable multimedia player a message that the identification code and play times have been completely uploaded. Accordingly, the portable multimedia player determines that the identification code and play times have been completely uploaded to the content providing server 30 and thus removes the play restriction.

That is, to reduce inconvenience (troublesomeness) that the multimedia play is stopped due to the play restriction in the portable multimedia player, the play restriction in the portable multimedia player is removed immediately after the identification code and play times have been uploaded to the content providing server 30 through the program installed in the computer.

Although the user has not yet paid the fees corresponding to the identification code and play times (i.e., the number of times the multimedia have been enjoyed), the fees will be later charged to the user according to the already uploaded identification code and play times based on the user payment information. Therefore, there are no cases where the service provider does not receive the just fees from the user.

Hereinafter, a still further embodiment of the present invention (a portable multimedia player with a radio frequency identification tag installed therein) will be described.

In this embodiment of the present invention, a radio frequency identification tag (RFID) installed in a portable multimedia player is used to record an identification code and play times associated with the multimedia file that a user has played.

Preferably, a play limit value (e.g., about 5,000 songs per month) is also set even in such a portable multimedia player in order to prevent a user from further playing a multimedia file without forwarding the identification code and play times to the content providing server, i.e. without paying the fees corresponding to the number of times the multimedia files has been played. More preferably, when the total play times associated with all the identification codes reach a predetermined play limit value, the impossibility of play and the instructions to transmit the identification code and play times recorded on the RFID to the content providing server through a terminal (e.g., a computer, a mobile communication terminal or the like) with an RFID reader installed therein are notified to the user.

For example, when the user has enjoyed about 5,000 songs using the portable multimedia player, a message is sent to inform that the user should forward the identification code and play times through the terminal with the RFID reader installed therein. Then, the user brings the portable multimedia player into contact with the RFID reader of the computer (or mobile communication terminal) to upload the identification code and play times to the content providing server.

Here, information on the content providing server to which the identification code and play times should be uploaded is needed. To this end, the content providing server information (e.g., an IP address) is registered in the RFID installed in the portable multimedia player or in an RFID reader management program (or the RFID reader itself).

That is, in a case where the content providing server information is registered in the RFID installed in the portable multimedia player, as the RFID of the portable multimedia player approaches the RFID reader of the computer, the RFID reader reads out the identification code, play times and content providing server information (upload object information) recorded in the RFID, accesses the content providing server based on its IP address and then uploads the identification code and play times of the portable multimedia player to the content providing server.

Meanwhile, in a case where the content providing server information is registered in the RFID reader management program, as the RFID of the portable multimedia player approaches the RFID reader of the computer, the RFID reader reads out the identification code and play times recorded in the RFID, accesses the content providing server based on its IP address already registered and then uploads the identification code and play times of the portable multimedia player to the content providing server.

As described above, as the user uploads the identification code and play times recorded in the RFID to the content providing server via the RFID reader, the play restriction is released or removed in the portable multimedia player.

That is, when the RFID reader reads out all the identification codes and play times recorded in the RFID of the portable multimedia player, the RFID reader determines that the user correctly reports the multimedia play times and sends the RFID a signal (radio wave) indicating that the identification code and play times have been completely uploaded. Accordingly, the portable multimedia player determines that the identification code and play times have been completely uploaded to the content providing server and thus causes the play restriction to be removed At this time, the portable multimedia player preferably initializes the total play times associated with all the identification codes recorded in the RFID.

As another example, when the RFID has a write function, the RFID preferably initializes the total play times associated with all the identification codes recoded in the RFID using the write function when receiving the upload completion signal from the RFID reader.

On the other hand, in this embodiment of the present invention, the portable multimedia player with the aforementioned RFID installed therein may not have the play restriction function.

That is, if the RFID approaches a specific one of several surrounding RFID readers as the portable multimedia player moves around due to the user's movement, the specific RFID reader automatically reads out the identification code and play times recorded in the RFID. This enables the identification code and play times recorded in the RFID to be automatically uploaded to the content providing server via the surrounding RFID reader, even though the portable multimedia player have no play restriction function, i.e. the user does not directly perform the upload operation after recognizing the play restriction.

In this case, however, the user's movement causes local area communication to frequently occur between the portable multimedia player and the several surrounding RFID readers and causes the respective RFID readers to frequently upload the identification code and play times recorded on the RFID. Accordingly, it is preferable to set a communication interval of the RFID reader in the portable multimedia player (preferably, RFID), so that the local area communication with the RFID reader is performed once per week, or to allow the local area communication with the RFID reader to be performed when the total play times associated with the identification codes reach a threshold value, preferably any value smaller than the play limit value (e.g., about 4,000 songs).

Although it has been described that the present invention is applicable to the multimedia files such as music files, video files and the like, it will be easily appreciated by those skilled in the art that the present invention can also be applied to contents such as games, digital photographs and documents, and application programs such as word processors in such a manner that they are distributed to users free of charge, the number of times the users have used the files are checked and the fees corresponding to the number of times used are charged to the users in a post-paid manner.

In the meantime, since the existing terminals (e.g., mobile communication terminals, computers, notebook computers, PDAs, portable MP3 players, portable video players, and the like) cannot recognize an identification code inserted in the multimedia file, i.e. since they do not have a function of recognizing the multimedia file in a new format, the existing terminals cannot play the multimedia file with the identification code inserted therein. Accordingly, it is preferable to support software-wise firmware upgrade or hardware-wise component replacement for the existing terminals through a service center, data transmission and reception via Internet connection, a terminal management program or the like, so that the existing terminals can play the multimedia file with the identification code inserted therein. By supporting the terminal upgrade in software/hardware, the users can play the multimedia file with the identification code inserted therein using the existing terminals (or the terminals to which the present invention is applied). This allows the content provider or copyright holder to distribute the multimedia files with the identification code inserted therein and charge the user the fees for the played multimedia files, thereby further activating the post-paid billing system and method for the multimedia files according to the present invention.

While the present invention has been described with reference to the aforementioned embodiments thereof, the embodiments are merely for illustration, but they should not be construed to limit the scope of the present invention. It will be understood by those skilled in the art that various changes or modifications may be made within the principle and scope of the present invention as defined by the following claims.

According to the present invention, users can download multimedia files free of charge and pay the fees for the played multimedia files according to the number of times the multimedia files have been played. Therefore, there is an advantage in that the users can enjoy a variety of music, movies and the like at a lower price as compared with the pre-paid billing system.

In addition, since a service provider can correctly and clearly charge the users the fees corresponding to the number of times the user has played the multimedia file, the profit distribution between the service provider (i.e., content provider) and the multimedia copyright holder can be made. Accordingly, the multimedia copyright holder can make copyright profits for the multimedia files distributed free of charge. This promotes the development of a multimedia industry that is rapidly depressed due to unauthorized duplication.

Further, the users can freely duplicate/distribute multimedia files through P2P data share etc. while the service provider can charge the users the fees for the duplicated/distributed multimedia files played by the users. Therefore, there is another advantage in that copyright infringement due to the unauthorized duplication can be basically prevented.

## Claims

1. A post-paid billing system based on the number of times multimedia files have been played, comprising:
a terminal having a wired or wireless Internet function; and
a content providing server for providing multimedia files,
wherein the content providing server includes:
a file creating means for creating a multimedia file by inserting an identification code into an external multimedia source;
a file database for storing the multimedia file created by the file creating means;
a file transmitting means for transmitting the multimedia file to the terminal when receiving a multimedia file download request signal from the terminal;
a play times receiving means for receiving an identification code and play times for the multimedia file from the terminal;
a billing means for charging a user of the terminal a fee corresponding to the identification code and play times received from the play times receiving means; and
a user database for storing user payment information.

2. The system as claimed in claim 1, wherein the billing means charges the fee corresponding to the identification code and play times together with a mobile communication fee when the user payment information stored in the user database is in relation to the mobile communication fee.

3. The system as claimed in claim 1, wherein the terminal comprises:
a data storage means for storing external multimedia files and play times associated with the identification code recorded in a play times recording means;
a multimedia playing means for playing the relevant multimedia file stored in the data storage means;
a play times counting means for monitoring a state where the multimedia file is played by the multimedia playing means and counting the number of times the multimedia file has been played;
a play times recording means for recording the play times for the multimedia file associated with the identification code in the data storage means when the play times counting means counts the number of times played; and
a play times transmitting means for transmitting the identification code and play times for the multimedia file stored in the data storage means to the content providing server at a predetermined period of time.

4. The system as claimed in claim 3, wherein the terminal further comprises a play restriction unit for informing impossibility of play and instructions to transmit the play times when total play times for the multimedia files associated with all the identification codes stored in the data storage means reach a predetermined play limit value.

5. The system as claimed in claim 4, wherein the play restriction means initializes the play times associated with all identification codes stored in the data storage means when the play times transmitting means transmits the respective identification codes and play times to the content providing server in response to the instructions to transmit the play times.

6. The system as claimed in claim 3, wherein the multimedia playing means checks the multimedia file stored in the data storage means in response to a multimedia file play request signal, and informs the fact that the play is impossible when the identification code is not inserted in the multimedia file.

7. The system as claimed in any one of claims 3 to 6, wherein the play times counting means increases the play times for the relevant multimedia file when the multimedia playing means plays a certain amount of the multimedia file.

8. A post-paid billing system based on the number of times multimedia files have been played, comprising:
a terminal having a wired or wireless Internet function; and
a content providing server for providing multimedia files,
wherein the terminal comprises:
a data storage means for storing external multimedia files and play times associated with the identification code recorded in a play times recording means;
a multimedia playing means for playing the relevant multimedia file stored in the data storage means;
a play times counting means for monitoring a state where the multimedia file is played by the multimedia playing means and counting the number of times the multimedia file has been played;
a play times recording means for recording the play times for the multimedia file associated with the identification code in the data storage means when the play times counting means counts the number of times played; and
a play times transmitting means for transmitting the identification code and play times for the multimedia file stored in the data storage means to the content providing server at a predetermined period of time.

9. A post-paid billing method in a content providing server based on the number of times multimedia files have been played, the method comprising:
a file creating step of creating and storing a multimedia file by inserting an identification code into an external multimedia source;
a file transmitting step of transmitting the relevant multimedia file to a terminal when receiving a multimedia file download request signal from the terminal; and
a billing step of charging a user a fee corresponding to the identification code and play times for the multimedia file based on user payment information when receiving the identification code and play times from the terminal.

10. The method as claimed in claim 9, wherein the billing step comprises the step of charging the fee corresponding to the identification code and play times together with a mobile communication fee when user payment information already registered in the content providing server is in relation to the mobile communication fee.

11. A post-paid billing method in a terminal based on the number of times multimedia files have been played, the method comprising:
a multimedia file storing step of downloading and storing an external multimedia file with an identification code inserted therein;
a play times counting step of, when the relevant multimedia file is played, monitoring a play state of the multimedia file and counting the number of times the relevant multimedia file has been played;
a play times recording step of, when the play times for the multimedia file is counted, recording the play times associated with the relevant identification code; and
a play times transmitting step of transmitting the recorded identification code and play times for the multimedia files to a content providing server at a predetermined period of time.

12. The method as claimed in claim 11, further comprising, between the play times recording step and the play times transmitting step, a first play restricting step of informing impossibility of play and instructions to transmit the play times when total play times for the multimedia files associated with all the identification codes recorded in the play times recording step reach a predetermined play limit value.

13. The method as claimed in claim 12, wherein the first play restricting step comprises the step of initializing the already recorded play times associated with all the identification codes when the respective identification codes and play times are transmitted to the content providing server in response to the instructions to transmit the play times.

14. The method as claimed in claim 11, further comprising, between the multimedia storing step and the play times counting step, a second play restricting step of checking the multimedia file in response to a multimedia file play request signal and informing the fact that the play is impossible when the identification code is not inserted in the multimedia file.

15. The method as claimed in any one of claims 11 to 14, wherein the play times counting step comprises the step of monitoring a state where the relevant multimedia file is played and increasing the play times for the multimedia file when a certain amount of the multimedia file has been played.

16. A post-paid billing method based on the number of times multimedia files have been played, comprising:
a file creating step of creating and storing a multimedia file by inserting an identification code into an external multimedia source, by a content providing server;
a file transmitting step of transmitting the relevant multimedia file to a terminal when receiving a multimedia file download request signal from the terminal, by the content providing server;
a multimedia file storing step of downloading the external multimedia file with the identification code inserted therein from the content providing server and storing the downloaded multimedia file, by the terminal;
a play times counting step of, when the relevant multimedia file is played, monitoring a play state of the multimedia file and counting the number of times the relevant multimedia file has been played, by the terminal;
a play times recording step of, when the play times for the multimedia file is counted, recording the play times associated with the relevant identification code, by the terminal;
a play times transmitting step of transmitting the recorded identification code and play times for the multimedia files to a content providing server at a predetermined period of time, by the terminal; and
a billing step of charging a user a fee corresponding to the identification code and play times for the multimedia file based on user payment information when receiving the identification code and play times from the terminal, by the content providing server.

17. A post-paid billing method in a terminal based on the number of times the multimedia files have been played, the method comprising the steps of:
reading out an identification code and play times for the multimedia file stored in the portable multimedia player, when connected with a portable multimedia player;
forwarding the read identification code and play times to a content providing server;
receiving an authentication key for releasing or removing play restriction on the multimedia file from the content providing server; and
forwarding the received authentication key to the portable multimedia player.

18. A post-paid billing method in a portable multimedia player based on the number of times multimedia files have been played, the method comprising steps of:
restricting the play of multimedia files when total play times associated with all identification codes reach a predetermined play limit value;
uploading the total play times associated with all the identification codes to the terminal when connected with a terminal having a wired/wireless Internet function; and
removing the file play restriction for the multimedia file when receiving a notification from the terminal that the upload of the play times associated with all identification codes upload has been completed.

19. A post-paid billing method in a portable multimedia player with a radio frequency identification tag (RFID) installed therein, based on the number of times multimedia files have been played, the method comprising the steps of:
(a) downloading and storing an external multimedia file with an identification code inserted therein;
(b) when the multimedia file is played, monitoring a play state of the multimedia file and counting the number of times the multimedia file has been played; and
(c) when the play times for the multimedia file is counted, recording the play times associated with the identification code in the RFID.

20. The method as claimed in claim 19, further comprising a step of restricting the play of multimedia files when the total play times associated with all the identification codes recorded in step (c) reach a predetermined play limit value.

21. A post-paid billing method in a terminal with an RFID reader installed therein, based on the number of times multimedia files have been played, the method comprising the steps of:
reading out an identification code and play times for the multimedia file recorded in an RFID of a portable multimedia player, when the portable multimedia player approaches the terminal;
uploading the read identification code and play times to a content providing server in which the terminal has been already registered; and
informing the portable multimedia player that the identification code and play times have been uploaded to the content providing server.

22. The method as claimed in claim 21, wherein the portable multimedia player removes already set restriction on the multimedia file play when receiving a notification from the RFID reader that the identification code and play times have been uploaded.

23. A computer-readable recording medium in which a program for executing the post-paid billing method according to any one of claims 9, 11, 17, 18, 19 and 21 is recorded.
